(19) Europäisches Patentamt
European Patent Office
Office européen des brevets

(11) Publication number: **0 071 345**
**B1**

(12) **EUROPEAN PATENT SPECIFICATION**

(45) Date of publication of patent specification: **05.06.85**

(51) Int. Cl.$^4$: **C 09 D 11/00**

(21) Application number: **82303451.7**

(22) Date of filing: **01.07.82**

(54) **Ink compositions and process for ink jet printing.**

(30) Priority: **23.07.81 US 285948**

(43) Date of publication of application:
**09.02.83 Bulletin 83/06**

(45) Publication of the grant of the patent:
**05.06.85 Bulletin 85/23**

(84) Designated Contracting States:
**AT BE CH DE FR GB IT LI LU NL SE**

(56) References cited:
**US-A-4 228 438**

**PATENTS ABSTRACTS OF JAPAN, vol. 4, no. 46, 8 February 80, page 26C6 (C-6) (528)**

(73) Proprietor: **AMERICAN CAN COMPANY**
**American Lane**
**Greenwich, Connecticut 06830 (US)**

(72) Inventor: **Maxwell, Dorothy**
**1703 Crystal Springs Avenue**
**Oshkosh Wis. 54901 (US)**

(74) Representative: **Harvey, David Gareth et al**
**Graham Watt & Co. Riverhead**
**Sevenoaks Kent TN13 2BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 071 345 B1**

## Description

The present invention relates to ink compositions for jet printing and a process for ink jet printing. Ink compositions according to this invention are suitable for use in high speed jet ink printing systems, and basically comprise a low molecular weight polymerizable resin or blend of such resins, a solvent system, a colorant, and a photosensitive catalyst which, upon exposure to ultra-violet light, activates the polymerization of the resin or resin blend to provide a dry non-tacky printed image on a substrate.

A jet ink printing system dispenses discrete droplets of ink through a fine jet nozzle to a substrate. In this method of printing, unlike letter press gravure, silk screen, and other printing techniques, there is no contact between the printer and article. The ink droplets, which have a defined resistivity, are charged so that they can be deflected by an electric field when dispensed from the nozzle. Jet ink printing is of considerable importance in applying decorative and identifying indicia to a variety of substrates, including glass, metal and synthetic polymeric substrates. U.S. Patents 3,465,350 and 3,465,351 are exemplary of jet ink printing systems.

Inks to be used in jet printing have specific viscosity and resistivity limitations, should provide good wettability of the substrate, and must be quick drying and smear resistant. The inks must also display a consistent drop breakup length, drop velocity, and drop charge under machine operating conditions. Further, the inks must be compatible both with the jet printing equipment, and in the eventual end use application. With regard to the former it is critical that the ink can flow through the fine jet nozzles without clogging them.

Typically, jet inks comprise three basic components—a colorant such as a dye or pigment; a resin binding agent which adheres to the substrate surface and serves as a vehicle for the colorant; and a carrier fluid or solvent for the colorant and binding agent, the solvent evaporating upon application of the ink. In jet printing inks an electrolyte is commonly included to adjust the resistivity of the ink, and thus ensure that the droplets can be adequately charged whereby proper deflection is achieved. U.S. Patent 4,021,252 to Banczak et al is representative of this type of jet printing inks. Banczak uses from 1 to 25% by weight shellac as the binding agent, between 0.5 to 5.0% by weight of a basic dye as the colorant, and a solvent blend consisting essentially of alcohol and water. Other patents reflective of the Banczak approach include U.S. 4,024,096; 4,186,020; 4,070,322; 4,168,254 and 4,168,662.

Inks disclosed in the aforesaid references typically contain low concentrations of resin binding agent. High resin concentrations increase the ink viscosity as well as the likelihood of the resin in the ink solution being suspended or precipitated. Viscosity and solubility problems are further aggravated when a pigment which is typically insoluble in the solvent system, is incorporated in the ink. An example is titanium dioxide. Low resin concentrations are not preferred because large volumes of solvent, which flash evaporates during use of the ink, are necessary thereby increasing the size of the ink reservoir, the printing equipment and costs associated with transportation and storage of the ink itself.

Low molecular weight liquid resins can be incorporated into an ink solvent at high concentrations, but such resins result in tacky, easily smeared indicia on the substrates to which it is applied. Further, many low molecular weight resin are often toxic, and cannot be used in marking food packages or in other consumer oriented applications.

As disclosed in U.S. Patent 4,228,438, certain low molecular weight resins (e.g., prepolymers) obtained by the reaction of acrylic acid with epoxy or urethane compounds are photosensitive to ultra violet light. Such sensitivity is occasioned by the presence of carbon double bonds. Photoinitiators such as benzoin derivatives, when exposed to UV light, provide free radicals which promote polymerization of the resin after the resin has been applied to the substrate, thereby providing indicia of high molecular weight. Visibility of the indicia is provided by the inclusion of pigments such as titanium dioxide. The pigment has a particle size below 40 microns, and preferably below 5 microns.

In contradistinction to these epoxy-acrylic and urethane-acrylic resins which are cured by free radical polymerizations, resins used in the present invention are cationically polymerizable epoxy resins. Such resins have been used as polymeric coatings and laminates for flexible packaging, especially cardboard cartons. In this class of polymerization reaction, the photoinitiator, upon exposure to ultraviolet light, dissociates forming in the presence of water a hydronium ion and Lewis acid anion. The hydronium ion cleaves the oxirane ring leaving a carbonium ion available to continue the polymerization by reaction with another oxirane ring. A detailed analysis of the mechanism is disclosed in "Photosensitized Epoxides as a Basis for Light-Curable Coatings" by William R. Watt, American Chemical Society Symp. Ser. 114, Epoxy Resin Chemistry, Chapter 2 (1979).

This invention aims to provide a jet ink composition which comprises a high percentage of low molecular weight epoxy resin constituents which are polymerizable upon application to provide cured, rub and smear resistant indicia rapidly, upon application to a substrate, when exposed to source of radiation namely ultra-violet light. Desirably the ink composition contains as a colorant, a dye that will neither clog the jet printing nozzle nor interfere in the curing process. Rapid cure of the epoxy resin upon application and irradiation is achieved by a suitable photoinitiator in the ink.

The invention also provides a method for printing an actinically curable jet ink composition on a substrate, the indicia being rendered rub and smear resistant essentially upon application of ultra violet light.

According to the present invention, there is provided a jet ink composition for producing visible indicia on a substrate, the ink composition being formulated from a polymerizable epoxy resin, a colorant and a solvent, characterized in that the ink composition has at 25°C a viscosity of 1.5 and 25 mPa · s, a resistivity of less than 4000 ohm-cm., and a velocity of sound between 800 and 2,500 meters per second, and the ink composition comprising (A) 10 to 70% by weight of an epoxy resin selected from (i) diglycidyl ethers of bisphenol A, said resin being predominately the monomer thereof, (ii) polyepoxidized phenol or cresol novolacs, (iii) diepoxide ethers or esters having two epoxy cycloalkyl groups, (iv) polyglycidyl ethers of polyhydric alcohols, and (v) combinations thereof, the said epoxy resins being liquid at room temperature of having a Durran melting point of less than 100°C., and having an epoxy equivalent weight of less than 300; (B) 1 to 12% by weight of a photoinitiator, capable of rapidly polymerizing the epoxy resins, which provides a Lewis acid effective to initiate said polymerization reaction upon exposure to a source of radiation such as ultra-violet light; (C) less than 2% by weight of a colorant that does not adversely affect cure of the epoxy resins; and (D) a solvent blend containing solvents selected from aliphatic alcohols having one to five carbon atoms, alkyl ketones having two to five carbon atoms, aromatic hydrocarbons of benzene, toluene and xylene, propylene carbonate, ethylene glycol ethers having three or four carbon atoms, alkyl acetates having two to four carbon atoms, and combinations of these solvents, the solvent blend being volatile at ambient conditions.

Also according to the present invention, there is provided a process of jet printing for producing visible coded messages on glass, metal or polymeric substrates, characterised by

(1) forming a jet ink composition having (at 25°C) a viscosity of 1.5 to 25 mPa · s, a resistivity of less than 4000 ohm-cm., and a velocity of sound therein of 800 to 2,500 meters per second, the ink composition being formed from (A) 10 to 70% by weight of an epoxy resin selected from (i) diglycidyl ethers of bisphenol A, said resin being predominately the monomer thereof, (ii) polyepoxidized phenol or cresol novolacs, (iii) diepoxide ethers or esters having two epoxy cycloalkyl groups, (iv) polyglycidyl ethers of polyhydric alcohols, and (v) combinations thereof, the epoxy resins being liquid at room temperature or having a Durran melting point of less than 100°C. and having an epoxy equivalent weight of less than 300; (B) 1 to 12% by weight of a photoinitiator capable of rapidly polymerizing the epoxy resins and of the type that provides a Lewis acid effective to initiate said polymerization reaction upon exposure to a source of radiation such as ultraviolet light; (C) less than 2% by weight of a colorant that does not adversely affect cure of the resins, and (D) a solvent blend containing solvents selected from aliphatic alcohols of one to five carbon atoms, alkyl ketones of two to five carbon atoms, aromatic hydrocarbons of benzene, toluene and xylene, propylene carbonate, ethylene glycol ethers of three or four carbon atoms, alkyl acetates of two to four carbon atoms, and combinations of same, said solvent being volatile at ambient conditions;

(2) discharging the ink composition as a stream of electrically deflectable droplets through a nozzle;

(3) passing a substrate beneath the nozzle.

(4) deflecting the droplets onto the substrate in response to pre-set electric signal to form the coded message, and

(5) contemporaneously exposing the deflected ink composition to a source of the said radiation, whereby the photoinitiator releases sufficient amounts of the Lewis acid to effect rapid and substantial polymerization of the epoxy resin constituents.

The invention is now described in more detail by way of example only.

The jet ink composition embodying the present invention comprises an epoxy resin or blend of such resins which polymerize rapidly in the presence of a photoinitiator and upon exposure to a source of radiation, said resin or blend of resins providing a strongly adhering indicia on the substrate resistent to smearing and rubbing. The composition contains a photoinitiator of the type which provides a Lewis acid upon exposure to radiation, preferably ultra-violet light, and a colorant which is either a pigment or a dye, but is preferably a dye, that does not adversely affect the polymerization reaction. The foregoing constituents are contained in a solvent or blend of solvents, and the solvent system is such as to be capable of solvating the resin, dye and photoinitiator constituents. The ink constituents are combined in such proportions as to obtain a jet ink composition whose viscosity is about 1.5 to about 25 mPa · s at 25°C, preferably 1.5 to 18 mPa · s, a resistivity of less than 4000 ohm-cm, and a velocity of sound of between 800 to 2500 meters per second.

The epoxy constituent is selected from one or more of the following: diglycidyl ethers of bisphenol A; diepoxide ethers or esters having two epoxycycloalkyl groups; polyepoxidized phenol or cresol novolacs; and polyglycidyl ethers of a polyhydric alcohol, these resins having an epoxy equivalent weight of less than about 300. The epoxy constituent is present in the ink in the range of 10 to 70% by weight of the ink. The preferred ink includes a diglycidyl ether of bisphenol A alone or in combination with other epoxy resins.

The preferred photoinitiator to obtain rapid cure times is bis - [4 - (diphenylsulfio)phenyl]sulfide bis-M.X6 initiator, wherein M is selected from the group consisting of phosphorous, antimony or arsenic and X is a halide, particularly a fluoride. The initiator is present in concentrations of 1 to about 12% by weight.

The solvent system preferably comprises a blend of solvents selected from the groups consisting of alkyl ketones having 2 to 5 carbon atoms and aliphatic alcohols of 1 to 5 carbon atoms. Other hydrocarbon solvents may be used, provided the solvent system solubilizes the other ink constituents, and is compatible for use with jet printing equipment.

In use the ink is fed from a supply reservoir to the nozzle of the jet printing apparatus and is then dispensed as a coded series of droplets onto the substrate. Evaporation of the solvent blend from the droplets is achieved rapidly, and deposited indicia cure upon radiation. Because the amount of ink actually printed is small, most jet printers transfer ink from the supply reservoir in a larger and more controllable volume, apply only the quantity needed to the substrate, and recycle the excess. However, the entire flow of ink from the reservoir discharges through the nozzle at atmospheric conditions, and the resulting flash vaporization causes a change in the cycled ink composition. For this reason it is preferred to reconstitute the cycled ink with make-up solution consisting essentially of solvent, although the make-up may also include non-solvent constituents if required. The make-up ink solution is formulated specifically to re-attain approximately the supply reservoir composition for subsequent re-use of the cycled ink.

The present jet ink compositions have as primary constituents a colorant, an epoxy resin binding agent, a solvent or blend of solvents, and a photoinitiator which forms a Lewis acid and a cation upon exposure to a radiation source, for example, an electromagnetic or ultra violet light source. The solvent system is preferably adapted to provide hydrolysis of the Lewis acid resulting in the formation of a positively charged hydronium ion. Each of the primary constituents must be in proper proportion to achieve both suitability for the jet ink printing apparatus and for adhesion to the particular substrate. To meet these use requirements, the following standards should be attained:

(1) Inks should dry effectively instantly, or be smear resistant upon irridation with subsequent complete drying in about 60 seconds, and preferably in less than 30 seconds. That is, the epoxy resin contained within the ink composition should cure substantially within this timespan, and the solvent should be essentially completely evaporated therefrom leaving a non-tacky, smear-resistant printed image.

(2) Ink viscosity should be from about 1.5 to about 25 mPa · s, preferably 1.5 to 18 mPa · s.

(3) Cured or irradiated indicia printed on glass substrates should exhibit ready adhesion thereto, be abrasion and fade resistant, and have an ability to withstand conditions of moisture and elevated temperature encountered during conventional pasteurization operations.

(4) As applied to metal or synthetic polymeric surfaces, the cured indicia should exhibit resistance to fading and be able to maintain adhesion under pasteurization conditions when immersed in aqueous solution for 15 minutes at 150°F (65.5°C).

(5) Cured indicia printed on bottles should exhibit resistance to removal by lubricant soaps conventionally used by bottlers on conveying lines.

(6) Inks should have a minimum shelf life of about one month, preferably about three months.

Fade resistance as used herein means that cured indicia should remain visible on the substrate for a period of not less than three months. Shelf life is defined as the ability of the ink to cure and to provide a visible image on the substrate upon use after storage at ambient conditions for not less than one month. Of course, the inks should be stored in a dark container to prevent premature polymerization.

The individual constituents of the present inks will now be discussed in more detail.

Resin binding agents

The ink compositions of the present invention contain at least one epoxy resin constituent characterized by two or more oxirane rings, said epoxy resin, i.e., essential prepolymer, being soluble in the solvent system, and preferably being a liquid resin. The epoxy resins or blend of such resins must be present in sufficient concentration so that a hardened indicia is formed after application of the jet ink to the substrate, and upon drying and curing. As used herein, drying relates to the evaporation of the solvent from ink droplets during application and also from the indicia during the curing period. Curing on the other hand concerns the polymerization of the epoxy prepolymer(s) upon initiation of the reaction. In addition to the aforesaid epoxy resins included in the jet ink composition, other non-reactive and/or reactive resins may be included optionally to enhance one or more properties of the ink itself or the indicia.

Selection of the essential prepolymer provides a means by which the ink properties and indicia attributes may be influenced. It is necessary to obtain a final ink composition having a viscosity of 1.5 to 25 mPa · s at 25°C., preferably 1.5 to 18 mPa · s. Although the choice of solvent system is of primary importance in achieving the desired viscosity, prepolymer selection and concentration is also an important factor in obtaining inks which do not clog the fine jet nozzles. The choice of prepolymer blend is also quite important in obtaining an ink composition which cures rapidly upon initiation, and within the time constraints stated previously. Of course, choice of initiator is also to be considered in achieving rapid cure, and should be compatible with the prepolymer used. It has also been found that proper prepolymer selection will result in indicia that provide good adhesion to a variety of substrates, for example, glass, polyester tape, aluminum, and low density polyethylene. Proper prepolymer selection also provides indicia with good resistance to removal by water, soapy water or oil.

By using curable prepolymers of relatively low molecular weight as opposed to high molecular weight resins now commonly used in jet inks, an ink may be fashioned which is within the viscosity limitations of the jet printer, yet which may contain a very high percent of the prepolymer. Hence, the inks of the present invention require low solvent concentrations thereby reducing manufacturing, transportation and storage costs.

The jet inks of the present invention must contain at least one epoxy resin of prepolymer selected from the previously given list of resins having an epoxy equivalent weight of less than about 300. Preferably, the

resins are liquids, although low melting point solids can be used provided that they are soluble in the solvent system, and do not increase the viscosity of the ink above the 25 mPa · s limit. At least one of the above noted resins is required to provide a cured polymer that adheres readily to the substrate, although blends of the said resins can be formulated for improved adhesion, and to provide ink compositions having specific viscosity and cure time properties.

Diglycidyl ethers of bisphenol A (DGEBA resins) have the structure

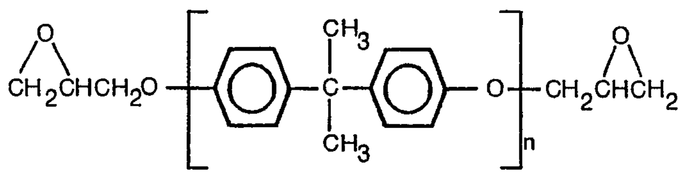

and are prepared by the reaction of epichlorohydrin and bisphenol A. For use in the present jet ink, the DGEBA resin should have an average molecular weight of less than about 700, and should have an epoxy equivalent weight between about 170 to about 300, preferably about 170 to about 230. Hence, the DGEBA resin will be a mixture comprising predominantly the monomer (n=1), and successively lesser amounts of the dimer (n=2), trimer (n=3), etc. Preferably the DGEBA resin will be a viscous liquid having a viscosity of 5000 to 35000 mPa · s at 25°C., although small concentrations of higher viscosity resins or low melting point resins whose Durran melting point is less than about 100°C may be included.

DGEBA resins having the aforesaid properties are commercially available from several manufacturers for example, Ciba-Geigy Company under the trademark ARALDITE, e.g., ARALDITE 6020; Dow Chemical Company under the DER trademark, e.g. DER 331; Celanese Corporation EPI-REZ, e.g. EPI-REZ 510; Reichhold Chemicals, Inc. EPOTUF, e.g. EPOTUF 37-139; Shell Chemical Company EPON, e.g. EPON 825; and Union Carbide ERL, e.g. ERL 2774.

Phenol or cresol novolacs are obtained by a condensation reaction between formaldehyde and cresol or phenol in the presence of an acid catalyst and have the structure (for phenol)

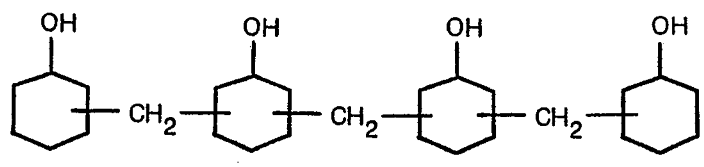

Polyepoxidized phenol or cresol novolaks are prepared by etherification of two or more of the hydroxyl groups, e.g.,

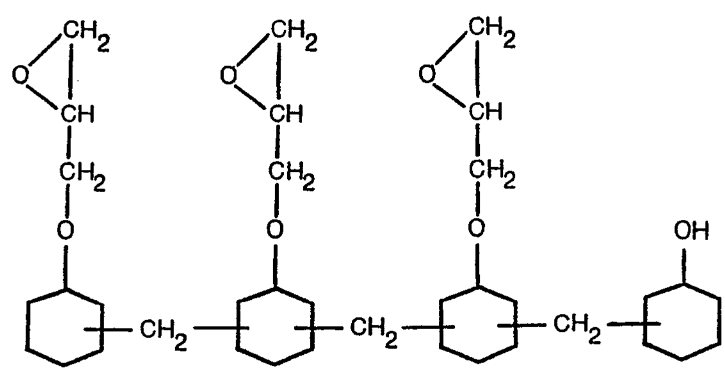

Such resins should have molecular weights on the order of 1000 and epoxy equivalent weights ranging between 170 to about 235, and are available as liquids or low melting point solids. Preferably, liquids are used in the jet inks, the viscosities thereof ranging between 1400 to 70000 mPa · s at 52°C. Inclusion of these resins within the jet ink composition is advantageous in that the resulting polymer crosslinking will be branched thereby providing improved adhesion to the substrate, especially for substrates ultimately subjected to water, soapy water or oil.

The novolac epoxy resins are widely available commercially, for example, Ciba-Geigy Company EPN, e.g. EPN 1139; Dow Chemical Company DEN, e.g., DEN 438; Celanese Corporation EPI-REZ, e.g., EPI-REZ 5156; Reichhold Chemicals, Inc. EPOTUF, e.g., EPOTUF 37-170; Shell Chemical Company EPON, e.g., EPON 154 and Union Carbide ERR-0 00.

The diepoxidized esters are obtained by reaction of an epoxidized cyclic alcohol and an epoxidized cycloalkanecarboxylic acid. Exemplary of this class of resins is 3,4 - epoxycyclohexylmethyl - 3,4 - epoxycyclohexane carboxylate sold under the trademark ERL 4221 by Union Carbide Plastics Division and which has the structure

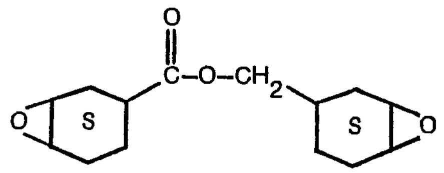

It is understood that many functional group substitutions can be made maintaining the presence of the two ring saturated epoxies. For example, bis (3,4 - epoxy - 6 - methylcyclohexyl methyl) adipate which has the structure

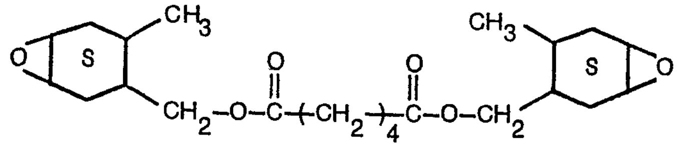

and is available as ERL 4289 from Union Carbide, is suitable for inclusion in the jet ink composition.

Exemplary of the diepoxide ethers used herein is bis (2,3-epoxycyclopentyl) ether of the structural formula

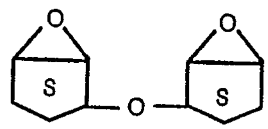

sold by Union Carbide under the trademark ERLA-4400.

Preferably, the jet ink will contain the DGEBA resin not only because it provides good curing and adhesion properties, but also because it is commercially available in a wide choice of desirable viscosity ranges. It is also preferred, however, to include one or more of the other above designated epoxy resins to regulate cure time and to improve adhesion characteristics of the cured indicia. Thus, resistance to removal by water, soapy water, oils and organic solvents is improved by including novolac or bis (epoxycycloalkyl) ester resins, while cure time can be increased by including either the diepoxide esters or ethers named above.

It is also possible to include gylcidyl ethers, for example, monoepoxides of the general structure

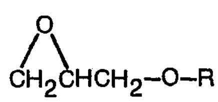

where R may be an alkyl group of 4 to 12 carbon atoms, an aryl group, or an alkene group of 2 to 6 carbon atoms. These epoxides are commonly called reactive diluents, and can be used to adjust the viscosity of the ink composition, but are not essential to the present invention. Other polymerizable resins, for example DGEBA resins of very high equivalent weight, i.e., VARCUM 29-108 manufactured by Reichhold Chemicals, Inc., which resins are sometimes used as binding agents in jet inks not designed for curing by UV light, may be included to enhance properties of the ink.

Other resins, not polymerizable resins, for example, rosins, particularly maleic acid, fumaric acid and pentaerythritol modified rosens, acrylics and polyacrylics, and polyvinyl acetates may also be incorporated to provide better adhesion to the substrate. Typically, these other resins will be present in the ink in an amount less than 15% by weight.

Photoinitiator

The catalyst or photoinitiator used herein is of the type which, upon exposure to a radiation source, e.g., ultra violet light, forms a Lewis acid. It is essential that the initiator chosen should promote rapid cure of the resins included in the jet ink and be stable over the shelf life of the ink. It is also important that the initiator be relatively insensitive to humidity, inasmuch as many high speed bottling lines operate at variable ambient conditions. Suitable initiators are the aromatic diazonium salts of complex halogen halides, i.e. salts tabulated in Table I of U.S. 3,936,557; aromatic onium salts of elements in Groups Va and VIa of the Periodic classification of the elements for example, salts described in U.S. Patents 4,058,401 and 4,069,056 diaryliodonium salts disclosed in Crivello et al "Photoinitiated Cationic Polymerization Using Diaryliodonium Salts" J. of Radiation Curing, July 1972, and bis - [4 - (diphenylsulfonio) phenyl] sulfide bis-M.X6 initiators disclosed earlier in this specification. The last mentioned class of initiators is disclosed in U.S. 4,201,640 assigned to American Can Company.

The preferred initiator is bis - [4 - (diphenylsulfonio) phenyl] sulfide bis-hexafluorophosphate (BDS), manufactured by ourselves, and is solvated to a 33% by weight solution in propylene carbonate. However, triphenylsulfonium hexafluorophosphate (TPS) also rapidly cures the resin.

It is believed that conventional electrolytes, generally necessary in conventional jet ink formulations to achieve the proper resistivity of less than 4000 ohm-cm., preferably less than 3000 ohm.-cm., interfere with the photoinitiating reaction, probably by neutralizing the Lewis acid. However, the aforesaid BDS and TPS

initiators, and most likely other complex salt initiators, when provided in excess of the amount required to trigger the curing reaction, do provide the specified resistivity. Hence, while only 0.3 to 3.0% initiator by weight would generally be considered appropriate to start polymerization, we prefer to add between 3 to 12% initiator by weight. Percentages referred to in the preceding sentence are on an inert free basis. That is, solvents such as propylene carbonate for BDS initiator, and other inert materials that may be in the initiator formulation as obtained from the source of supply are not included in said percentage ranges.

Colorants

Colorants used herein are either dyes or pigments. Pigments are defined as any substance, usually a dry powder insoluble in water or organic solvent, that has a positive colorant value and imparts color to another substance, e.g., metallic oxides for instance of titanium. Because pigments are insoluble in ink compositions, they are included as fine powders, typically below 5 microns, yet they still tend to plug the fine jet nozzles. For this reason, dyes soluble in the solvent system are the preferred colorants. However, most dyes, which contain active organometallic complexes, have been found to affect the cure mechanism, especially those dyes with sulfur and sodium groups. We have found that certain azo/metal complex dyes do not adversely affect the initiator for example, Spirit Soluble Fast Violet RR, manufactured by BASF-Wyandotte and Orasol Black RL by Ciba-Geigy, Inc.

Solvent system

The organic solvent serves to reduce the viscosity of the ink composition to values suitable for use in jet printing equipment. The solvent blend used should be adapted to dissolve the resins as well as the dyes, and preferably will be sufficiently polar to form the more stable Lewis acid hydrolysis product, although small amounts of water may be added or may be provided from the environment to do so. The solvent system should be suitable for substantially complete dissolution of the other ink constituents, and evaporate substantially from the droplets of ink leaving the jet printing nozzle. The solvent can be a blend of one or more solvents selected from alkyl ketones of from 2 to 5 carbon atoms, aromatic hydrocarbons of benzene, toluene and xylene, ethylene glycol ethers of 3 or 4 carbon atoms, acetates of from 2 to 4 carbon atoms and aliphatic alcohols of 1 to 5 carbon atoms. Preferably, one solvent should be included to readily solubilize the dye, if used, for example the aliphatic alcohol of from 1 to 5 carbon atoms. The solvent blend is formulated for adjustment of ink properties such as the velocity of sound, its wetting ability and its viscosity. Propylene carbonate, used to solvate BDS initiator, has also been found to be a proper component of the solvent system.

Miscellaneous components

In addition to the aforesaid resin, initiator, colorant and solvent constituents, the ink composition may contain small amounts of other additives such as optical brighteners, e.g., HM-35 from Day-GLO Corporation, surfactants, e.g., FC 430 from 3M Corporation, which is a fluorinated alkyl ester surfactant, and coupling agents, e.g., L720 which is an organosilane available from Dow Chemical Company.

Composition of the jet inks

The inks disclosed herein contain 10 to 70% by weight of one or more of the epoxy resins hereinbefore referred to as the essential prepolymers, preferably 25 to 60% by weight of the said resins. Preferably, a blend of epoxy resins comprising DGEBA resins and one or more of the other essential epoxy resins hereinbefore named (that is, not including the reactive diluents or the high molecular weight reactive resins used to enhance adhesion) are used in the weight ratio of between 1:4 to 4:1, most preferably 1:2 to 2:1. Novolac resins are advantageously included in the preferred resin blends to promote crosslinking having highly branched structures. Substantial branching, sufficient to obtain improved adhesion of the cured indicia on the substrate surface, is obtained with a ratio of between about 0.1 to 0.5 parts novolac resin per part of non-novolac resin. Hence, excellent jet ink compositions are obtained, based on the most preferred blends mentioned above, with the essential epoxy resins within the following ratios:

| | Pbw |
|---|---|
| DGEBA | 1—2 |
| Novolac | 0.273—1 |
| Other | 0—1.727 |

Depending upon the selection of essential resins and the solvent system, up to 40% by weight of the ink may contain reactive diluents, although generally the amount of reactive diluent, if used, would be less than 15% by weight of the ink. The reactive diluent is especially useful where high concentrations, over 35% by weight of the ink, of high viscosity or solid DGEBA or novolac resins are included in the ink concentration. The diluents serve to reduce viscosity of such formulations without providing substantial amounts of solvent that otherwise flash evaporate. While the diluent does not enhance adhesion and rub

resistance to the cured indicia, its use in combination with the essential resins and in proper amounts does not deleteriously affect indicia properties.

The initiator comprises 1 and 12% of the ink on a weight basis, said percentage range being on a solvent and/or inert free basis.

Typically, the colorant comprises less than 2% by weight of the ink, preferably less than 1.0% by weight.

The solvent blend comprises the remainder of the ink composition, the solvent percentage including the solvent, if any, for the photoinitiator. Hence, the solvent can comprise between about 10 to about 85% of the ink by weight although typically the solvent represents about 25 to about 60% of the ink by weight. Low solvent concentrations, i.e., solvent weight percents between about 10 to 25% usually indicate that a reactive diluent has been included in the ink composition. High solvent concentrations, above 60%, are typically employed when a reactive diluent is not included and high viscosity DGEBA and novolac resins are used. Preferably, the solvent blend comprises methanol and methyl ethyl ketone in the weight ratios of 1:4 to 4:1, preferably between 1:2 to 2:1. Up to 20% isopropanol may advantageously be included in the above solvent blend to enhance the wetting properties of the ink on the substrate, the isopropanol evaporating more slowly from the ink droplets leaving the printer. Methanol is also a preferred solvent because we have found it acts as a chain terminator, thereby preventing reaction until use, thus providing excellent ink stability. When the ink is used, the methanol evaporates rapidly from the system permitting reaction to occur.

The jet printing process employing inks as described above will now be described by way of example.

A continuous stream of ink is transferred from a pressurized supply reservoir for discharge as droplets from a printing nozzle at ambient conditions. The pressure in the reservoir is sufficient to overcome transfer line and nozzle pressure drops, the pressure being about 10 to 50 psia (0.69 to 3.45 bar). The disposition of the droplets exiting the nozzle is dependent on whether a coded message is to be printed on a substrate. Assuming that the coded message is not to be printed, the droplets are recaptured proximate to the nozzle and cycled back to a return tank. Because the nozzle always discharges to atmosphere, it is necessary that the return tank be under vacuum, the return tank pressure being about 4—6 psia (0.28 to 0.41 bar).

When an article to be encoded passes beneath the printer nozzle, a portion of the droplet stream is deflected by a pre-set series of electric signals thereby causing the coded message to be printed. The bulk of the droplets, however, continue to be recaptured for transfer to the return tank. This system is used because the actual amount of ink necessary for printing the coded messages is substantially smaller than the volumetric flow rate through the printing equipment required for meaningful control. Droplets applied to the substrate are exposed to ultra-violet light, and the reaction begins, residual solvent simultaneously evaporating from the droplets, the drier and cured indicia adhering strongly to the substrate and resistent to fading, rubbing and smearing.

Make-up solution.

Because of the flash vaporization which occurs at the nozzle, and the reduction in pressure in the return tank, the composition of the ink in the return tank is different than the ink in the supply reservoir. For this reason it is necessary to reconstitute the former for eventual re-use by the addition of make-up solution. The make-up formulation is a function of the rate of loss of the ink constituents, and consists essentially of the volatile solvent species, but may also include non-solvent constituents. In general, the make-up formulation is added intermittently. The return tank can be mounted on a weigh scale, or its volume measured, and as evaporation occurs, an automatic valve actuated to transfer make-up solution to the supply reservoir. Alternately, a property of the ink could be monitored, e.g. specific gravity, to actuate the transfer. Because the rate of loss is dependent upon the actual ink composition and operating conditions, the make-up solution composition should be determined a priori by a trial and error procedure.

The examples below further illustrate the present invention:

Example 1

| Epoxy resins | Pbw | Pbw |
|---|---|---|
| Diglycidyl ether of bisphenol A (Epon 825, Shell Chemical Company) | 26.0 | |
| 3,4-Epoxycyclohexylmethyl-3,4-epoxy-cyclohexane carboxylate (ERL 4221, Union Carbide Corporation) | 14.2 | |
| Monoglycidyl ether (Epoxide 8, Proctor and Gamble Company) | 7.2 | |
| | 47.4 | 47.4 |
| Solvent system | | |
| Methanol | 7.6 | |
| Ethanol | 4.3 | |
| Methyl ethyl ketone | 9.7 | |
| Ethylene glycol monomethyl ether (methyl Cellosolve, Union Carbide Co.) | 19.2 | |
| | 40.8 | 40.8 |
| Other Components | | |
| Bis-[4-(diphenylsulfonio) phenyl] sulfide-bis hexafluorophosphate in 33% solution by weight of propylene carbonate (BDS photoinitiator, American Can Company) | | 9.5 |
| Spirit Soluble Fast Violet RR dye (BASF—Wyandotte Corp.) | | 1.8 |
| Dimethyamine hydrochloride electrolye | | 0.5 |
| | | 100.0 |

The monoglycidyl ether is a reactive diluent. Although run successfully on aluminium foil, several drawbacks were noted. Not all of the dye dissolved, and curing of the resin took longer than expected. It appeared that the presence of the electrolyte, normally included in jet ink compositions, interfered with formation of the Lewis acid, and prevented rapid curing. The high percentage of methyl Cellosolve also affected drying time in that this solvent tended to remain with the resin rather than be subject to flash evaporation. Finally, the solvent system was not formulated for complete dissolution of the dye. In Example 1 as well as in the other examples below, the amount designated for the initiator includes the solvent and/or inert material therefor.

Example 2

| Epoxy resins | Pbw | Pbw |
|---|---|---|
| Epon 825, Shell Chemical Company | 22.3 | |
| ERL 4221, Union Carbide Corporation | 11.9 | |
| Epoxide 8, Proctor and Gamble Company | 5.8 | |
| Diglycidyl ether of bisphenol A (Varcum 27—109 Reichhold Chemical Company) | 5.0 | |
| | 45.0 | 45.0 |
| Solvent system | | |
| Methanol | 10.0 | |
| Ethyl acetate | 25.0 | |
| Methyl Cellosolve | 10.0 | |
| | 45.0 | 45.0 |
| Other components | | |
| BDS photoinitiator in 33% propylene Carbonate, American Can Company | | 10.0 |
| Orasol Black RL dye (Ciba-Geigy, Corp.) | | 1.0 |
| FC 430 Surfactant, 3M Company | | 0.1 |
| | | 101.1 |

The ink cured more easily than the jet ink of Example 1, and provided slightly better adhesion to the substrate. Varcum 27—109 is not considered an essential prepolymer, but was included for improved adhesion.

Example 3

| Epoxy resins | Pbw | Pbw |
|---|---|---|
| Epon 825 | 18.7 | |
| ERL 4221 | 10.0 | |
| Epoxide 8 | 4.9 | |
| Ortho-cresolformaldehyde novalac epoxy resin (ECN 1235, Ciba-Geigy Corporation) | 5.0 | |
| | 38.6 | 38.6 |
| Solvent system | | |
| Methanol | 15.8 | |
| Methyl ethyl ketone | 24.2 | |
| Methyl Cellosolve | 9.3 | |
| | 49.3 | 49.3 |
| Other components | | |
| BDS photoinitiator | | 11.0 |
| Spirit Soluble Fast Violet RR | | 1.0 |
| FC 430 | | 0.1 |
| | | 100.0 |

The dye dissolved more readily in the above solvent system, while the presence of the novolac resin provided branching of the crosslinked epoxy resins. As a result, better solvent resistance of the cured indicia was noted.

Example 4

| Epoxy resin | Pbw | Pbw |
|---|---|---|
| Epon 825 | 15.2 | |
| ERL 4221 | 8.1 | |
| Epoxide 8 | 4.0 | |
| ECN 1235 | 5.0 | |
| | 32.3 | 32.3 |
| Solvent system | | |
| Methanol | 22.7 | |
| Methyl ethyl ketone | 22.7 | |
| Isopropanol | 7.2 | |
| Water | 4.5 | |
| | 57.1 | 57.1 |
| Other components | | |
| BDS photoinitiator | | 9.0 |
| Spirit Soluble Fast Violet RR | | 1.4 |
| FC 430 | | 0.1 |
| | | 100.0 |

Methyl Cellosolve was eliminated from the solvent system and was found not to be essential for solubilizing the epoxy resins. Surprisingly, about 4.5% water by weight did not cause instability of the ink or prevent cure.

Example 5

| Epoxy resin | Pbw | Pbw |
|---|---|---|
| Epon 825 | 23.0 | |
| ERL 4221 | 12.5 | |
| Epoxide 8 | 6.0 | |
| ECN 1235 | 9.8 | |
| | 51.3 | 51.3 |
| Solvent system | | |
| Methanol | 17.0 | |
| Methyl ethyl ketone | 17.0 | |
| | 34.0 | 34.0 |
| Other components | | |
| BDS photoinitiator, American Can Company | | 12.7 |
| Spirit Soluble Fast Viuolet RR dye, BASF-Wyandotte Corporation | | |
| Organosilane coupling agent (L720, Dow Chemical Co.) | | 11.0 |
| | | 108.9 |

Viscosity of the above ink composition was about 5 mPa · s and the velocity of sound was about 1,400 meters per second, each property being measured at about 25°C.

Example 6

| Epoxy resins | Pbw | Pbw |
|---|---|---|
| Epon 825 | 20.0 | |
| ERL 4221 | 11.0 | |
| Epoxide 8 | 5.0 | |
| Monoglycidyl ether (Epoxide 7, (Proctor and Gamble Company) | 27.0 | |
| | 63.0 | 63.0 |
| Solvent system | | |
| Methanol | 11.0 | |
| Methyl ethyl ketone | 11.0 | |
| | 22.0 | 22.0 |
| Other | | |
| BDS photoinitiator | | 14.0 |
| Spirit Soluble Fast Violet RR | | 1.0 |
| FC 430 | | 0.1 |
| | | 100.1 |

| | |
|---|---|
| Viscosity, mPa · s at 25°C | 5.35 |
| Velocity of Sound, mps at 25°C | 1386 |

Example 7

| Epoxy resins | Pbw | Pbw |
|---|---|---|
| Epon 825 | 27.0 | |
| ERL 4221 | 15.0 | |
| Epoxide 8 | 7.0 | |
| ECN 1235 | 11.3 | |
| | 60.3 | 60.3 |
| Solvent System | | |
| Methanol | 16.0 | |
| Methyl ethyl ketone | 8.2 | |
| n-propyl acetate | 16.0 | |
| | 40.2 | 40.2 |
| Other | | |
| BDS photoinitiator | | 15.0 |
| Spirit Soluble Fast Violet RR | | 1.0 |
| FC 430 | | 0.1 |
| | | 116.6 |

Example 8

| Epoxy resins | Pbw | Pbw |
|---|---|---|
| Epon 825 | 22.6 | |
| ERL 4221 | 12.0 | |
| Epoxide 8 | 6.0 | |
| ECN 1235 | 10.0 | |
| Diglycidyl ether of bisphenol A (Araldite 6060, Ciba-Geigy Corp.) | 9.0 | |
| | 59.0 | 59.0 |
| Solvent system | | |
| Methanol | 13.0 | |
| Methyl ethyl ketone | 6.0 | |
| n-propyl acetate | 12.0 | |
| | 31.0 | 31.0 |
| Other | | |
| BDS photoinitiator | | 12.0 |
| Spirit Soluble Fast Violet RR | | 0.8 |
| FC 430 | | 0.1 |
| | | 102.9 |

Example 9

| Epoxy resin | Pbw | Pbw |
|---|---|---|
| Epon 825 | 11.0 | |
| ERL 4221 | 6.0 | |
| Epoxide 8 | 3.0 | |
| ECN 1235 | 6.8 | |
| | 26.8 | 26.8 |
| Solvent system | | |
| Methanol | 29.0 | |
| Methyl ethyl ketone | 23.0 | |
| Isopropanol | 3.4 | |
| | 55.4 | 55.4 |
| Other | | |
| Alkali Soluble Modified Rosin Ester (Pentalyn 255, Hercules, Inc.) | | 4.0 |
| BDS Photoinitiator | | 12.0 |
| Spirit Soluble Fast Violet RR | | 1.6 |
| FC 430 | | 0.04 |
| | | 99.84 |

Pentalyn 255 is a rosin binding agent to provide better adhesion of the indicia to the substrate. The properties of the ink were:

| | |
|---|---|
| Viscosity, mPa · s at 25°C | 2.54 |
| Velocity of Sound, mps at 25°C | 1,300 |
| Resistivity, ohm-cm. | 650 |

**Claims**

1. A jet ink composition for producing visible indicia on a substrate, the ink composition being formulated from a polymerizable epoxy resin, a colorant and a solvent, characterised in that the ink composition has at 25°C a viscosity of 1.5 and 25 mPa · s, a resistivity of less than 4000 ohm-cm., and a velocity of sound between 800 and 2,500 meters per second, and the ink composition comprising (A) 10 to 70% by wight of an epoxy resin selected from (i) diglycidyl ethers of bisphenol A, said resin being predominately the monomer thereof, (ii) polyepoxidized phenol or cresol novolacs, (iii) diepoxide ethers or esters having two epoxy cycloalkyl groups, (iv) polyglycidyl ethers of polyhydric alcohols, and (v) combinations thereof, the said epoxy resins being liquid at room temperature or having a Durran melting point of less than 100°C., and having an epoxy equivalent weight of less than 300; (B) 1 to 12% by weight of a photoinitiator, capable of rapidly polymerizing the epoxy resins which provides a Lewis acid effective to initiate said polymerization reaction upon exposure to a source of radiation such as ultra-violet light; (C) less than 2% by weight of a colorant that does not adversely affect cure of the epoxy resins; and (D) a solvent blend containing solvents selected from aliphatic alcohols having one to five carbon atoms, alkyl ketones having two to five carbon atoms, aromatic hydrocarbons of benzene, toluene and xylene, propylene carbonate, ethylene glycol ethers having three or four carbon atoms, alkyl acetates having two to four carbon atoms, and combinations of these solvents, the solvent blend being volatile at ambient conditions.

2. The composition according to claim 1, characterised in that the epoxy resin is selected from resins including liquid diglycidyl ether of bisphenol A having a viscosity of between 5000 to 35000 mPa · s at 25°C. has an epoxy equivalent weight of between 170 and 230, phenol or cresol novolac is selected from novolacs having a viscosity of between 1400 to 70000 mPa · s at 52°C. and an epoxy equivalent weight of between 170 to 235, the diepoxide resin is selected from 3,4 - epoxycyclohexylmethyl - 3,4 - epoxycyclohexane carboxylate, bis (3,4 - epoxy - 6 - methylcyclohexylmethyl) adipate, and bis (2,3 - epoxycyclopentyl) ether, and the polyglycidyl ether is selected from 1,4-bis (2,3-epoxypropoxy) butane, bis [2 - (2,3 - epoxyproxy) ethyl] ether, and 1,2,3-tris (2,3-epoxypropoxy)propane.

3. Themcomposition according to claim 1 or claim 2, characterised in that the epoxy resin is a blend of diglycidyl ether of bisphenol A and one or more other resins in the weight ratio of 1:4 to 4:1.

4. The composition according to any of claims 1 to 3, characterised in that the resin blend contains 0.1 to 0.5 parts novolac epoxy resin per part of non-novolac epoxy resins.

5. The composition according to any of claims 1 to 4, characterised in that the colorant is a pigment having a particle size of less than 5 microns, or an azo/metal complex dye.

6. The composition according to claim 5, characterised in that the colorant is selected from Spirit Soluble Fast Violet RR Orasol and Black RL dyes.

7. The composition according to any of claims 1 to 6, characterised in that the solvent system comprises methanol and methyl ethyl ketone in a weight ratio of 1:4 to 4:1.

8. The composition according to claim 7, characterised by the solvent system containing up to 20% isopropanol by weight.

9. The composition according to any of claims 1 to 8 characterised in that the epoxy resin constitutes 25 to 50% of the ink by weight.

10. The composition according to any of claims 1 to 9, characterised in that its viscosity is 1.5 to 18 mPa · s, its resistivity is 500 to 2500 ohm-cm., and the velocity of sound therein is 1,150 to 1,750 mps, all measured at 25°C.

11. The composition according to any of claims 1 to 10, characterised in that the photoinitiator is an onium salt selected from aromatic diazonium salts of complex halogen halides, diaryliodonium salts, and aromatic onium salts of Group Va and VIa elements of the Periodic classification of the elements.

12. The composition according to claim 11, characterised in that the photoinitiator is a bis [4-(diphenylsulfio)phenyl] sulfide bis-M.X6 aromatic onium salt of Group Va, where M is selected from the group consisting of phosphorous, antimony and arsenic, and X is a halide, the photoiniator being solvated in a 33% solution by weight of propylene carbonate.

13. The composition according to any of claims 1 to 12, characterised by having a tack free time less than 30 seconds and preferably less than 5 seconds.

14. The composition according to any of claims 1 to 13, further characterised by comprising up to 40% by weight of a reactive diluent epoxy resin.

15. The composition according to any of claims 1 to 14, characterised by further comprising up to 15% by weight of a binding agent resin.

16. A process of jet printing for producing visible coded messages on glass, metal of polymeric substrates, characterised by

(1) forming a jet ink composition having (at 25°C) a viscosity of 1.5 to 25 mPa · s, a resistivity of less than 4000 ohm-cm., and a velocity of sound therein of 800 to 2,500 meters per second, the ink composition being formed from (A) 10 to 70% by weight of an epoxy resin selected from (i) diglycidyl ethers of bisphenol A, said resin being predominately the monomer thereof, (ii) polyepoxidized phenol or cresol novolacs, (iii) diepoxide ethers or ester having two epoxy cycloalkyl groups, (iv) polyglycidyl ethers of polyhydric alcohols, and (v) combinations thereof, the epoxy resins being liquid at room temperature or having a Durran melting point of less than 100°C. and having an epoxy equivalent weight of less than 300; (B) 1 to 12% by weight of a photoinitiator capable of rapidly polymerizing the epoxy resins and of the type that provides a Lewis acid effective to initiate said polymerization reaction upon exposure to a source of radiation such as ultraviolet light; (C) less than 2% by weight of a colorant that does not adversely affect cure of the resins, and (D) a solvent blend containing solvents selected from aliphatic alcohols of one to five carbon atoms, alkyl ketones of two to five carbon atoms, aromatic hydrocarbons of benzene, toluene and xylene, propylene carbonate, ethylene glycol ethers of three or four carbon atoms, alkyl acetates of two to four carbon atoms, and combinations of same, said solvent being volatile at ambient conditions;

(2) discharging the ink composition as a stream of electrically deflectable droplets through a nozzle;

(3) passing a substrate beneath the nozzle,

(4) deflecting the droplets onto the substrate in response to pre-set electric signal to form the coded message, and

(5) contemporaneously exposing the deflected ink composition to a source of the said radiation, whereby its photoinitiator releases sufficient amounts of the Lewis acid to effect rapid and substantial polymerization of the epoxy resin constituents.

17. A process according to claim 16, characterised in that the ink employed comprises 25 to 50% by weight of an epoxy resin blend comprising, by weight percent of said blend, 20 to 80% of a diglycidyl ether of bisphenol A, said resin being predominantly the monomer thereof and having a viscosity of between 5000 to 35000 mPa · s at 25°C. and has an epoxy equivalent weight of between 170 and 230, 0 to 25% of a

polyepoxidized phenol or cresol novolacs having a viscosity of between 1,400 to 70,000 mPa · s at 52°C. and an epoxy equivalent weight of between 170 to 235, and 20 to 80% of a diepoxide ether or ester having two epoxy cycloalkyl groups.

18. A process according to claim 16 or claim 17, characterised in that the ink employed contains an onium salt photoinitiator selected from aromatic diazonium salts of complex halogen halides, diaryliodonium salts and aromatic onium salts of Group Va and VIa elements.

19. A process according to claim 18, characterised in that the photoinitiator is a bis-[4-(diphenylsulfio) phenyl] sulfide bis-M.X6 aromatic onium salt of a Group Va element, where M is selected from the group consisting of phosphorous, antimony and arsenic, and X is a halide, the photoinitiator being solvated in a 33% solution by weight of propylene carbonate.

20. A process according to claim 16, 17 or 18, characterised in that the ink employed has a colorant selected from Spirit Soluble Fast Violet RR and Orasol Black RL dyes.

21. A process according to any of claims 16 to 20, characterised in that the ink is discharged continuously from a supply reservoir and through the nozzle at ambient conditions, ink not deflected onto the substrate being captured for reuse.

**Revendications**

1. Une composition d'encre à éjecter pour l'obtention de repères visibles sur un subjectile, la composition d'encre étant formulée à partir d'une résine époxyde polymérisable, d'un colorant et d'un solvant, caractérisée en ce qu'elle a une viscosité à 25°C de 1,5 à 2,5 mPa · s, une résisitivité de moins de 4000 ohms-cm et une vitesse du son en son sein de 800 à 2500 m/s et en ce qu'elle comprend (A) 10 à 70% en poids d'une résine époxyde choisie parmi (1) les éthers diglycicyliques de bisphénol A, ladite résine en étant de manière prédominante le monomère, (2) des novoloques phénoliques ou crésoliques polyépoxydées, (3) des éthers diépoxydés ou des esters comportant deux groupes époxy cycloalkyle, (4) des éthers polyglycidyliques de polyols et (5) leurs combinaisons, lesdites résines époxydes étant liquides à température ambiante ou ayant un point de fusion de Durran de moins de 100°C et ayant un poids équivalent d'époxyde de moins de 300; (B) 1 à 12% en poids d'un photo-amorceur, capable de polymériser rapidement les résines époxydes qui fournisse un acide de Lewis efficace pour amorcer ladite réaction de polymérisation lors de l'exposition à une source de rayonnement, par example la lumière ultraviolette; (C) moins de 2% en poids d'un colorant qui n'affecte pas fâcheusement la polymérisation des résines époxydes; et (D) un mélange de solvants contenant des solvants choisis parmi les alcools aliphatiques comptant un à cinq atomes de carbone, les alkylcétones comptant deux à cinq atomes de carbone, les hydrocarbures aromatiques de benzène, toluène et xylène, le carbonate de propylène, les éthers d'éthylène glycol ayant trois ou quatre atomes de carbone, les acétates d'alkyle ayant deux à quatre atomes de carbone et des combinaisons de ces solvants, le mélange de solvants étant volatil dans les conditions ambiantes.

2. La composition selon la revendication 1, caractérisée en ce que la résine époxyde est choisie parmi les résines comportant de l'éther diglycidylique liquide de bisphénol A ayant une viscosité de 5000 à 35.000 mPa · s à 25°C et un poids équivalent d'époxyde de 170 à 230, la novolaque phénolique ou crésolique est choisi parmi les novolaques ayant une viscosité de 1400 à 70.000 mPa · s à 52°C et un poids équivalent d'époxyde de 170 à 235, la résine diépoxyde est choisie parmi le carboxylate de 3,4 - époxycyclohexylméthyl - 3,4 - epoxycyclohexane, le bis (3,4 - éoxy - 6 - méthylcyclohexylméthyl) adipate et le bis (2,3 époxycyclopentyl) éther et l'éther polyglycidylique est choisi parmi le 1,4 - bis (2,3 - époxypropoxy) butane, le bis [ - (2,3 - époxypropoxy) éthyl] éther, et le 1,2,3-tris (2,3 - époxypropoxy)-propane.

3. La composition selon la revendication 1 ou 2, caractérisée en ce que la résine époxyde est un mélange d'éther diglycidylique de bisphénol A et d'une ou de plusieurs autres résines dans un rapport en poids de 1:4 à 4:1.

4. La composition selon l'une quelconque des revendications 1 à 3, caractérisée en ce que le mélange de résines contient 0,1 à 0,5 partie de résine époxyde novolaque pac partie de résines époxydes non novolaques.

5. La composition selon l'une quelconque des revendications 1 à 4, caractérisée en ce que le colorant est un pigment ayant une granulométrie inférieure à 5 microns ou un colorant du type complexe azoïque/métallique.

6. La composition selon la revendication 5, caractérisée en ce que le colorant est choisi parmi le Spirit Soluble Fast Violet RR et l'Orasol Black RL.

7. La composition selon l'une quelconque des revendications 1 à 6, caractérisée en ce que le système de solvants comprend du méthanol et de la méthyléthylcétone dans un rapport en poids de 1:4 à 4:1.

8. La composition selon la revendication 7, caractérisée en ce que le système de solvants contient jusqu'à 20% en poids d'isopropanol.

9. La composition selon l'une quelconque des revendications 1 à 8, caractérisée en ce que la résine époxyde constitue 25 à 50% en poids de l'encre.

10. La composition selon l'une quelconque des revendications 1 à 9, caractérisée en ce que sa viscosité est de 1,5 à 18 mPa · s, sa résistivité de 500 à 2500 ohms-cm et la vitesse du son en son sein de 1150 à 1750 m/s, toutes mesures opérées à 25°C.

11. La composition selon l'une quelconque des revendications 1 à 10, caractérisée en ce que le photo-amorceur est un sel de radical onium choisi parmi les sels de diazonium aromatiques d'halogénures halogènes complexes, les sels de diaryliodonium et les sels d'onium aromatiques d'éléments de groupe Va et VIa de la Classification périodiques des éléments.

12. La composition selon la revendication 11, caractérisée ce que le photo-amorceur est un sel d'onium du type bis - [4 - (diphénylsulfonio)phényl] sulfure bis-MX6 du groupe Va, où M est chois parmi le phosphore, l'antimoine et l'arsenic et X est un halogénure, le photo-amorceur étant solvaté dans une solution à 33% en poids de carbonate de propylène.

13. La composition selon l'une quelconque des revendications 1 à 12, caractérisée en ce qu'elle présente un temps de non adhérence inférieur à 30 secondes et de préférence à 5 secondes.

14. La composition selon l'une quelconque des revendications 1 à 13, caractérisée en outre en ce qu'elle comprend jusqu'à 40% en poids d'une résine époxyde diluante réactive.

15. La composition selon l'une quelconque des revendications 1 à 14, caractérisée en ce qu'elle comprend encore jusqu'à 15% en poids d'une résine du type liant.

16. Un procédé d'impression au jet pour l'obtention de messages codés visibles sur des subjectiles en verre, en métal ou en polymère, caractérisé en ce que

(I) On prépare une composition d'encore à éjecter ayant (à 25°C) une viscosité de 1,5 à 25 mPa · s, une résistance inférieure à 4000 ohms-cm et une vitesse du son en son sein de 800 à 2500 m/s, la composition d'encre étant formée de (A) 10 à 70% en poids d'une résine époxyde choisie parmi (1) les éthers diglycidyliques de bisphénol A, ladite résine en étant de manière prédominante le monomère, (2) les novolaques phénoliques ou crésoliques polyépoxydées, (3) les éthers ou esters diépoxydés comportant deux groupes époxy cycloalkyliques, (4) les éthers polyglycidyliques de polyols et (5) leurs combinaisons, les résines époxydes étant liquides à température ambiante ou ayant un point de fusion de Durran inférieur à 100°C et ayant u poids équivalent d'époxyde inférieur à 300; (B) 1 à 12% en poids d'un photoamorceur capable de polymériser rapidement les résines-époxydes et du type propre à fournir un acide de Lewis efficace pour amorcer ladite réaction de polymérisation lors de l'exposition à une source de rayonnement, par example la lumière ultraviolette; (C) moins de 2% en poids d'un colorant qui n'affecte pas fâcheusement la polymérisation des résines et (D) un mélange de solvants contenant des solvants choisis parmi les alcools aliphatiques comptant un à cinq atomes de carbone, les alkyl cétones comptant deux à cinqu atomes de carbone, les hydrocarbures aromatiques de benzène, toluène et xylène, les carbonates de propylène, les éthers d'éthylène glycol ayant trois ou quatre atomes de carbone, les acétates d'alkyl ayant deux à quatre atomes de carbone et leurs combinaisons, ledit solvant étant volatil dans les conditions suivants;

(II) on décharge la composition d'encre à travers un ajutage sous forme de courant de gouttelettes pouvant être déviées électriquement.

(III) on fait défiler un subjectile sous l'ajutage,

(IV) on amène les gouttelettes sur le subjectile par déviation en réponse à un signal électrique prédéfini pour constituer le message codé et

(V) on expose simultanément les compositions d'encre ayant subi la déviation à une source dudit rayonnement, de façon que son photo-amorceur libère des quantités d'acide Lewis suffisantes pour assurer une polymérisation rapide et importante des constituants de la résine époxyde.

17. Un procédé selon la revendication 16, caractérisé en ce que l'encre employée comprend 25 à 50% d'un mélange de résines époxydes comportant, en pourcentages en poids dudit mélange, 20 à 80% d'un éther diglycidylique de bisphénol A, ladite résine en étant de manière prédominante le monomère et ayant une viscosité de 5000 à 35.000 mPas à 25°C et un poids équivalent d'époxyde de 170 à 230, 0 à 25% d'une novolaque phénolique ou crésolique polyépoxydée ayant une viscosité de 1400 à 70 000 mPa · s à 52°C et un poids équivalent d'époxyde de 170 à 235, et 20 à 80% d'un éther ou ester diépoxydée comptant deux groupes époxy cycloalkyle.

18. Une procédé selon la revendication 16 ou 17, caractérisée en ce que l'encre employée contient un photoamorceur du type sel de radical onium choisi parmi les sels de diazonium aromatiques d'halogénures d'halogène complexes, les sels de diaryliodonium et les sels d'onium aromatiques d'éléments du Groupe Va et VIa.

19. Un procédé selon la revendication 18, caractérisé en ce que le photo-amorceur est un sel d'onium du type bis - [4 - (diphénylsulfonio)phényl] sulfure bis-MX6 d'un élément du Groupe Va, où M est un choisi parmi le phosphore, l'antimoine et l'arsenic et X est un halogénure, le photo-amorceur étant solvaté dans une solution à 33% en poids de carbonate de propylène.

20. Un procédé selon la revendication 16, 17, ou 18, caractérisé en ce que l'encre employée comporte un colorant choisi parmi le Spirit Soluble Fast Violet RR et l'Orasol Black RL.

21. Un procédé selon l'une quelconque des revendications 16 à 20, caractérisée en ce que l'encore se déverse en continu d'un réservoir d'alimentation et traverse l'ajutage dans les conditions ambiantes, l'encre non amenée par déviation sur le subjectile étant captée pour être ré-utilsée.

**Patentansprüche**

1. Jet-Druckfarbe zur Erzeugung sichtbarer Zeichen auf einem Substrat, wobei die Druckfarbe aus einem polymerisierbaren Epoxidharz, einem Farbstoff und einem Lösungsmittel formuliert ist, dadurch gekennzeichnet, daß die Druckfarbe bei 25°C eine Viskosität von 1,5 bis 25 mPa · s, einen Widerstand von weniger als 4000 Ohm-cm und eine Schallgeschwindigkeit in ihr zwischen 800 und 2500 m/s aufweist und daß die Druckfarbe umfaßt: (A) 10 bis 70 Gewichtsprozent eines Epoxidharzes ausgewählt aus (i) Diglycidyläther von Bisphenol A, wobei das Harz hauptsächlich das Monomer davon ist, (ii) polyepoxidierte Phenol- oder Kresol-Novolake, (iii) Diepoxidäther oder -ester mit zwei Epoxid-Cycloalkylgruppen, (iv) Polyglycidyläther von mehrwertigen Alkoholen und (v) Kombinationen davon, wobei die genannten Epoxidharze bei Raumtemperatur flüssig sind oder einen Durran-Schmelzpunkt von weniger als 100°C aufweisen und ein Epoxid-Äquivalentgewicht von weniger als 300 besitzen; (B) 1 bis 12 Gewichtsprozent eines Photoinitiators, der zur raschen Polymerisation der Epoxidharze in der Lage ist und der eine zum Start der Polymerisationsreaktion bei Belichten mit einer Strahlungsquelle, wie Ultraviolettes Licht, wirksame Lewis-Säure ergibt; (C) weniger als 2 Gewichtsprozent eines Farbstoffes, der die Aushärtung der Epoxidharze nicht ungünstig beeinflußt, (D) ein Lösungsmittelgemisch, das Lösungsmittel enthält, die ausgewählt sind aus aliphatischen Alkoholen mit 1 bis 5 Kohlenstoffatomen, Alkylketonen mit 2 bis 5 Kohlenstoffatomen, aromatischen Kohlenwasserstoffen von Benzol, Toluol und Xylol, Propylencarbonat, Äthylenglykoläther mit 3 bis 4 Kohlenstoffatomen, Alkylacetate mit 2 bis 4 Kohlenstoffatomen und Kombinationen dieser Lösungsmittel, wobei das Lösungsmittelgemisch bei Umgebungsbedingungen flüchtig ist.

2. Druckfarbe nach Anspruch 1, dadurch gekennzeichnet, daß das Epoxidharz ausgewählt ist aus Harzen, die flüssigen Diglycidyläther von Bisphenol A mit einer Viskosität zwischen 5000 und 35 000 mPa · s bei 25°C und einem Epoxid-Äquivalentgewicht zwischen 170 und 230 einschließen, das Phenol- oder Kresol-Novolakharz ausgewählt ist aus Novolakharz mit einer Viskosität zwischen 1400 und 70 000 mPa · s bei 52°C und einem Epoxid-Äquivalentgewicht zwischen 170 und 235, das Diepoxidharz ausgewählt ist aus 3,4 - Epoxycyclohexylmethyl - 3,4 - epoxycyclohexancarboxylat, Bis - (3,4 - epoxy - 6 - methylcyclohexylmethyl) - adipat und Bis - (2,3 - epoxycyclopentyl) - äther, und der Polyglycidyläther ausgewählt ist aus 1,4 - Bis - (2,3 - epoxypropoxy) - butan, Bis - [2 - (2,3 - epoxypropoxy) - äthyl] - äther und 1,2,3 - Tris - (2,3 - epoxypropoxy) - propan.

3. Druckfarbe nach Anspruch 1 oder 2, dadurch gekennzeichnet, daß das Epoxidharz ein Gemisch von Diglycidyläther von Bisphenol A und einem oder mehreren anderen Harzen im Gewichtsverhältnis von 1:4 bis 4:1 ist.

4. Druckfarbe nach einem der Ansprüche 1 bis 3, dadurch gekennzeichnet, daß das Harzgemisch 0,1 bis 0,5 Teile Novolak-Epoxidharz pro Teil Nicht-Novolak-Epoxidharze enthält.

5. Druckfarbe nach einem der Ansprüche 1 bis 4, dadurch gekennzeichnet, daß der Farbstoff ein Pigment mit einer Teilchengröße unter 5 Mikron oder ein Azo/Metall-Komplexfarbstoff ist.

6. Druckfarbe nach Anspruch 5, dadurch gekennzeichnet, daß der Farbstoff Spirit Soluble Fast Violet RR oder Orasol Black RL ist.

7. Druckfarbe nach einem der Ansprüche 1 bis 6, dadurch gekennzeichnet, daß das Lösungsmittelsystem Methanol und Methyläthylketon mit einem Gewichtsverhältnis von 1:4 bis 4:1 umfaßt.

8. Druckfarbe nach Anspruch 7, dadurch gekennzeichnet, daß das Lösungsmittelsystem bis zu 20 Gewichtsprozent Isopropanol enthält.

9. Druckfarbe nach einem der Ansprüche 1 bis 8, dadurch gekennzeichnet, daß das Epoxidharz 25 bis 50 Gewichtsprozent der Druckfarbe darstellt.

10. Druckfarbe nach einem der Ansprüche 1 bis 9, dadurch gekennzeichnet, daß seine Viskosität 1,5 bis 18 mPa · s, sein Widerstand 500 bis 2500 Ohm-cm und die Schallgeschwindigkeit darin 1150 bis 1750 mps, jeweils gemessen bei 25°C betragen.

11. Druckfarbe nach einem der Ansprüche 1 bis 10, dadurch gekennzeichnet, daß der Photoinitiator ein Onium-Salz ist, ausgewählt aus aromatischen Diazoniumsalzen von komplexen Halogen-Halogeniden, Diaryljodoniumsalzen und aromatischen Onium-Salzen der Elemente der Gruppen Va und VIa des Periodensystems de Elemente.

12. Druckfarbe nach Anspruch 11, dadurch gekennzeichnet, daß der Photoinitiator ein Bis - [4 - (diphenylsulfio) - phenyl] - sulfid - bis - M.X6 aromatisches Oniumsalz der Gruppe Va ist, wobei M Phosphor, Antimon oder Arsen ist und X ein Halogenidion ist, und der Photoinitiator in einer 33 gewichtsprozentigen Lösung von Propylencarbonat solvatisiert ist.

13. Druckfarbe nach einem der Ansprüche 1 bis 12, dadurch gekennzeichnet, daß sie eine klebefreie Zeit von weniger als 30 Sekunden und vorzugsweise weniger als 5 Sekunden aufweist.

14. Druckfarbe nach einem der Ansprüche 1 bis 13, weiter gekennzeichnet dadurch, daß sie bis zu 40 Gewichtsprozent eines reaktiven Verdünnungs-Epoxidharzes umfaßt.

15. Druckfarbe nach einem der Ansprüche 1 bis 14, dadurch gekennzeichnet, daß sie außerdem bis zu 15 Gewichtsprozent eines Bindemittelharzes umfaßt.

16. Strahldruck-(Jet-Printing)-Verfahren zur Erzeugung sichtbarer verschlüsselter Botschaften auf Glas, Metall oder polymeren Substraten, dadurch gekennzeichnet, daß man

(1) ein Jet-Druckfarbe erzeugt, die bei 25°C eine Viskosität von 1,5 bis 25 mPa · s, einen Widerstand von

weniger als 4000 Ohm-cm und eine Schallgeschwindigkeit in ihr zwischen 800 und 2500 m/s aufweist, wobei die Druckfarbe umfaßt: (A) 10 bis 70 Gewichtsprozent eines Epoxidharzes ausgewählt aus (i) Diglycidyläther von Bisphenol A, wobei das Harz hauptsächlich das Monomer davon ist, (ii) polyepoxidierte Phenol- oder Kresol-Novolake, (iii) Diepoxidäther oder -ester mit zwei Epoxid-Cycloalkylgruppen, (iv) Polyglycidyläther von mehrwertigen Alkoholen und (v) Kombinationen davon, wobei die genannten Epoxidharze bei Raumtemperatur flüssig sind oder einen Durran-Schmelzpunkt von weniger als 100°C aufweisen und ein Epoxid-Äquivalentgewicht von weniger als 300 besitzen; (B) 1 bis 12 Gewichtsprozent eines Photoinitiators, der zur raschen Polymerisation der Epoxidharze in der Lage ist und der eine zum Start der Polymerisationsreaktion bei Belichtem mit einer Strahlungsquelle, wie ultraviolettes Licht, wirksame Lewis-Säure ergibt; (C) weniger als 2 Gewichtsprozent eines Farbstoffes, der die Aushärtung der Epoxidharze nicht ungünstig beeinflußt, (D) ein Lösungsmittelgemisch, das Lösungsmittel enthält, die ausgewählt sind aus aliphatischen Alkoholen mit 1 bis 5 Kohlenstoffatomen, Alkylketonen mit 2 bis 5 Kohlenstoffatomen, aromatischen Kohlenwasserstoffen von Benzol, Toluol und Xylol, Propylencarbonat, Äthylenglykoläther mit 3 bis 4 Kohlenstoffatomen, Alkylacetate mit 2 bis 4 Kohlenstoffatomen und Kombinationen dieser Lösungsmittel, wobei das Lösungsmittelgemisch bei Umgebungsbedingungen flüchtig ist,

(2) die Druckfarbe als ein Strom von elektrisch ablenkbaren Tröpfchen durch eine Düse entlädt;

(3) ein Substrat unter der Düse durchführt,

(4) die Tröpfchen als Antwort auf ein vorgegebenes elektrisches Signal auf das Substrat ablenkt, um die verschlüsselte Botschaft zu erzeugen und

(5) gleichzeitig die abgelenkte Druckfarbe einer Quelle der genannten Strahlung aussetzt, wobei ihr Photoinitiator genügende Mengen der Lewis-Säuren freisetzt, um rasche und vollständige Aushärtung der Epoxidharz-Bestandteile zu bewirken.

17. Verfahren nach Anspruch 16, dadurch gekennzeichnet, daß die verwendete Druckfarbe 25 bis 50 Gewichtsprozent eines Epoxidharz-Gemisches umfaßt, das in Gewichtsprozent des Gemisches besteht aus 20 bis 80% Diglycidyläther von Bisphenol A, wobei dieses Harz hauptsächlich das Monomere davon ist und eine Viskosität zwischen 5000 und 35 000 mPa · s bei 25°C und ein Epoxidäquivalentegewicht zwischen 170 und 230 aufweist, 0 bis 25% polyepoxidierte Phenol- oder Kresol-Novolake mit einer Viskosität zwischen 1400 und 70 000 mPa · s bei 52°C und einem Epoxid-Äquivalentgewicht von 170 bis 235, und 20 bis 80% Diepoxidäther oder -ester mit zwei Epoxid-Cycloalkylgruppen.

18. Verfahren nach Anspruch 16 oder Anspruch 17, dadurch gekennzeichnet, daß die verwendete Druckfarbe einen Oniumsalz-Photoinitiator enthält, der ausgewählt ist aus aromatischen Diazoniumsalzen von komplexen Halogen-Halogeniden, Diaryljodoniumsalzen und aromatischen Oniumsalzen der Elemente der Gruppen Va und VIa.

19. Verfahren nach Anspruch 18, dadurch gekennzeichnet, daß der Photoinitiator ein Bis - [4 - (diphenylsulfio) - phenyl] - sulfid - bis - M.X6 aromatisches Oniumsalz eines Elements der Gruppe Va ist, wobei M Phosphor, Antimon oder Arsen ist und X ein Halogenidion ist und wobei der Photoinitiator in einer 33 gewichtsprozentigen Lösung von Propylencarbonat solvatisiert ist.

20. Verfahren nach Anspruch 16, 17 oder 18, dadurch gekennzeichnet, daß die verwendete Druckfarbe Spirit Soluble Fast Violet RR oder Orasol Black RL als Farbstoff enthält.

21. Verfahren nach einem der Ansprüche 16 bis 20, dadurch gekennzeichnet, daß die Druckfarbe kontinuierlich aus einem Vorrats-Reservoir und durch die Düse bei Umgebungsbedingungen abgegeben wird, wobei nicht auf das Substrat abgelenkte Druckfarbe zur Wiederverwendung aufgefangen wird.